# EUROPEAN PATENT APPLICATION

(11) **EP 3 075 987 A1**
(43) Date of publication of application: **05.10.2016**
(21) Application number: 16163302.9
(22) Date of filing: 31.03.2016
(51) Int. Cl.: F02C 7/143, F01D 25/14

(54) **HEAT PIPE COOLING SYSTEM FOR A TURBOMACHINE**

(30) Priority: 02.04.2015 US 201514676895
(71) Applicant: General Electric Company, Schenectady, NY 12345 (US)
(72) Inventor: EKANAYAKE, Sanji, Atlanta, GA Georgia 30339 (US); SCIPIO, Alston Ilford, Atlanta, GA Georgia 30339 (US)
(74) Representative: Lee, Brenda

(57) **Abstract**

A turbomachine 100 includes a compressor 110 configured to compress air received at an intake portion 202 to form a compressed airflow that exits into an outlet portion 204. The compressor has a plurality of rotor blades 112 and a plurality of stator vanes 113, and a compressor casing 111 forming an outer shell of the compressor. A combustor 120 is operably connected with the compressor, and the combustor receives the compressed airflow. A turbine 130 is operably connected with the combustor, and the turbine receives combustion gas flow from the combustor. The turbine has a turbine casing. A cooling system is operatively connected to the compressor casing. The cooling system includes a plurality of heat pipes 250 located in at least a portion of the plurality of stator vanes 113. The heat pipes 250 are configured to be in thermal communication with the compressor casing 111. The heat absorbed by the plurality of heat pipes 250 is transferred to the compressor casing 111.

## Description

Exemplary embodiments of the present invention relate to the art of turbomachines and, more particularly, to a heat pipe cooler for a turbomachine.

Turbomachines include a compressor operatively connected to a turbine that, in turn, drives another machine such as, a generator. The compressor compresses an incoming airflow that is delivered to a combustor to mix with fuel and be ignited to form high temperature, high pressure combustion products. The high temperature, high pressure combustion products are employed to drive the turbine. In some cases, the compressed airflow leaving the compressor is re-compressed to achieve certain combustion efficiencies. However, recompressing the compressed airflow elevates airflow temperature above desired limits. Accordingly, prior to being recompressed, the airflow is passed through an intercooler. The intercooler, which is between two compressor stages, lowers the temperature of the compressed airflow such that, upon recompressing, the temperature of the recompressed airflow is within desired limits. However, conventional intercoolers are large systems requiring considerable infrastructure and capital costs.

In an aspect of the present invention, a turbomachine includes a compressor configured to compress air received at an intake portion to form a compressed airflow that exits into an outlet portion. The compressor has a plurality of rotor blades and a plurality of stator vanes, and a compressor casing forming an outer shell of the compressor. A combustor is operably connected with the compressor, and the combustor receives the compressed airflow. A turbine is operably connected with the combustor, and the turbine receives combustion gas flow from the combustor. The turbine has a turbine casing. A cooling system is operatively connected to the compressor casing. The cooling system includes a plurality of heat pipes located in at least a portion of the plurality of stator vanes. The heat pipes are configured to be in thermal communication with the compressor casing. The heat absorbed by the plurality of heat pipes is transferred to the compressor casing.

In another aspect of the present invention, a cooling system for a turbomachine is provided. The turbomachine includes a compressor, and a combustor operably connected with the compressor. A turbine is operably connected with the combustor. The compressor has a plurality of stator vanes, and a compressor casing forms an outer shell of the compressor. The cooling system operatively connected to the compressor casing. The cooling system includes a plurality of heat pipes located in at least a portion of the plurality of stator vanes. The plurality of heat pipes are configured to be in thermal communication with the compressor casing. Heat absorbed by the plurality of heat pipes is transferred to the compressor casing.

In yet another aspect of the present invention, a method of transferring heat to a compressor casing of a turbomachine is provided. The method includes a passing step that passes an airflow through a compressor. The compressor casing forms an outer shell of the compressor. The compressor has a plurality of stator vanes, and the compressor acts on the airflow to create a compressed airflow. An extracting step extracts heat from the plurality of stator vanes by thermally conducting the heat to a plurality of heat pipes. The plurality of heat pipes are in thermal communication with the compressor casing. A conducting step conducts heat from the plurality of heat pipes to the compressor casing. A radiating step radiates the heat from the compressor casing to an atmosphere surrounding the turbomachine.

In the drawings:
FIG. 1 is a simplified schematic diagram of a turbomachine.
FIG. 2 is a partially schematic, axial sectional view through a portion of the turbomachine, according to an aspect of the present invention.
FIG. 3 illustrates a cross-sectional view of the cooling system, according to an aspect of the present invention.
FIG. 4 illustrates a cross sectional shape of a circular or cylindrical heat pipe, according to an aspect of the present invention.
FIG. 5 illustrates a cross sectional shape of an oval heat pipe, according to an aspect of the present invention.
FIG. 6 illustrates a cross sectional shape of a polygonal heat pipe, according to an aspect of the present invention.
FIG. 7 illustrates a cross sectional shape of a rectangular with rounds corners heat pipe, according to an aspect of the present invention.
FIG. 8 illustrates a cross sectional shape of a circular or cylindrical heat pipe with a plurality of fins, according to an aspect of the present invention.
FIG. 9 illustrates a method for extracting heat from a compressed airflow generated by a turbomachine, according to an aspect of the present invention.

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

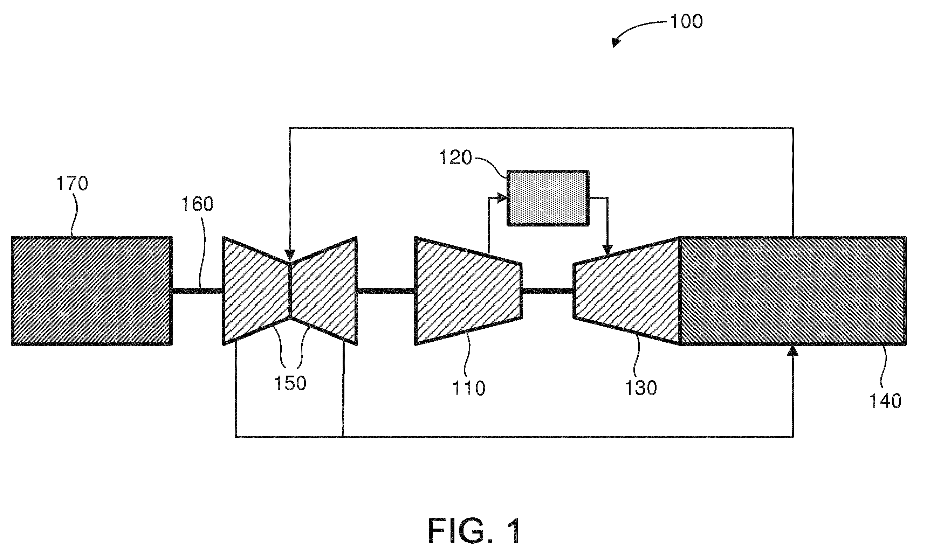

FIG. 1 illustrates a simplified diagram of a turbomachine 100. The turbomachine includes a compressor 110 operably connected to a combustor 120, and the combustor 120 is operably connected to a turbine 130. The turbine's exhaust may be operably connected to a heat recovery steam generator (HRSG) 140. The HRSG 140 generates steam that is directed into a steam turbine 150. In this example, all the turbomachines are arranged in a single shaft configuration, and the shaft 160 drives a generator 170. It is to be understood that the term turbomachine includes compressors, turbines or combinations thereof.

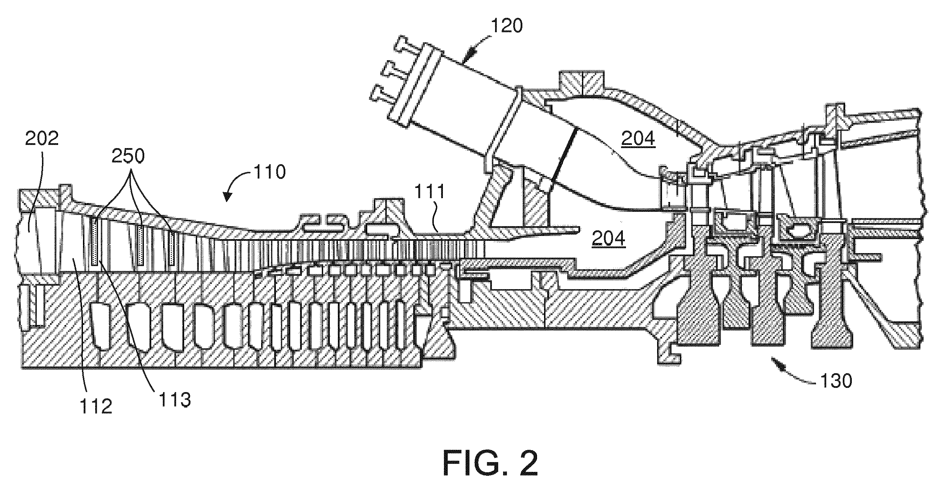

FIG. 2 is a partially schematic, axial sectional view through a portion of the turbomachine, according to an aspect of the present invention. The turbomachine 100 includes a compressor 110 having an intake portion 202 and an outlet portion 204. The compressor compresses air received at the intake portion 202 and forms a compressed airflow that exits from/into the outlet portion 204. The compressor 110 includes a compressor casing 111. The compressor casing 111 forms an outer shell of the compressor 110. The compressor also includes a plurality of rotor blades 112 and a plurality of stator vanes 113. The combustor 120 is operably connected with the compressor 110, and the combustor 120 receives the compressed airflow. The turbine 130 is operably connected with the combustor 120, and the turbine 130 receives combustion gas flow from the combustor 120.

A cooling system is operatively connected to the compressor casing 111. For example, the cooling system includes a plurality of heat pipes 250 that are located in the stator vanes 113. The heat pipes 250 are in thermal communication with the compressor casing 111. Heat absorbed from the stator vanes 113 and subsequently into the heat pipes 250 is transferred to the compressor casing 111. This heat may then be radiated to the atmosphere surrounding the compressor or turbomachine. The heat pipes 250 may be circumferentially located around the compressor.

As the turbomachine 100 operates, air is compressed into a compressed airflow. This compression generates heat. Some of the heat is transferred to the stator vanes 113, and this heat may be harvested by the heat pipes 250. The heat pipes 250 then transfer this heat to the compressor casing 111. In one example, the heat pipes located inside the stator vanes 113, and the heat pipes are configured to maintain thermal communication with the compressor casing 111. In other embodiments, the heat pipes 250 may be partially embedded in the compressor casing, or the heat pipes may extend external to the compressor casing. The heat pipes 250 may be located in stator vanes corresponding to or between the first through last stages of the compressor, 3^{rd} through 12^{th} stages, 5^{th} through 10^{th} stages, or in any individual stator vane stage(s) as desired in the specific application.

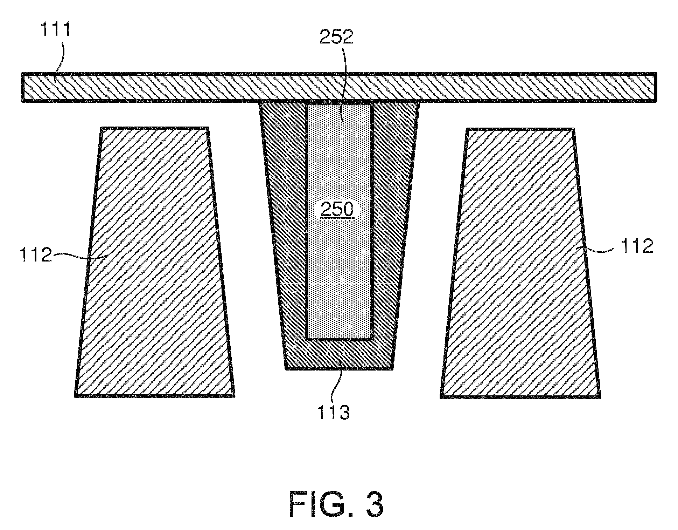

FIG. 3 illustrates a cross-sectional and schematic view of the cooling system, according to an aspect of the present invention. The heat pipe 250 is located in the stator vane 113 and is in thermal communication with the compressor casing 111. The heat pipes 250 include a heat transfer medium 252 which may be a liquid metal, molten salt or Qu material. As examples only, the heat transfer medium may be one or combinations of, aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy. As one specific example, the heat transfer medium 252 may be a molten salt comprising potassium, sodium or cesium. The outer portion of the heat pipes 250 may be made of any suitable material capable of serving the multiple purposes of high thermal conductivity, high strength and high resistance to corrosion from the heat transfer medium.

The heat pipes 250 may also be formed of a "Qu-material" having a very high thermal conductivity. The Qu-material may be in the form of a multi-layer coating provided on the interior surfaces of the heat pipes. For example, a solid state heat transfer medium may be applied to the inner walls in three basic layers. The first two layers are prepared from solutions which are exposed to the inner wall of the heat pipe. Initially the first layer which primarily comprises, in ionic form, various combinations of sodium, beryllium, a metal such as manganese or aluminum, calcium, boron, and a dichromate radical, is absorbed into the inner wall to a depth of 0.008 mm to 0.012 mm. Subsequently, the second layer which primarily comprises, in ionic form, various combinations of cobalt, manganese, beryllium, strontium, rhodium, copper, B-titanium, potassium, boron, calcium, a metal such as aluminum and the dichromate radical, builds on top of the first layer and forms a film having a thickness of 0.008 mm to 0.012 mm over the inner wall of the heat pipe. Finally, the third layer is a powder comprising various combinations of rhodium oxide, potassium dichromate, radium oxide, sodium dichromate, silver dichromate, monocrystalline silicon, beryllium oxide, strontium chromate, boron oxide, B-titanium and a metal dichromate, such as manganese dichromate or aluminum dichromate, which evenly distributes itself across the inner wall. The three layers are applied to the heat pipe and are then heat polarized to form a superconducting heat pipe that transfers thermal energy with little or no net heat loss.

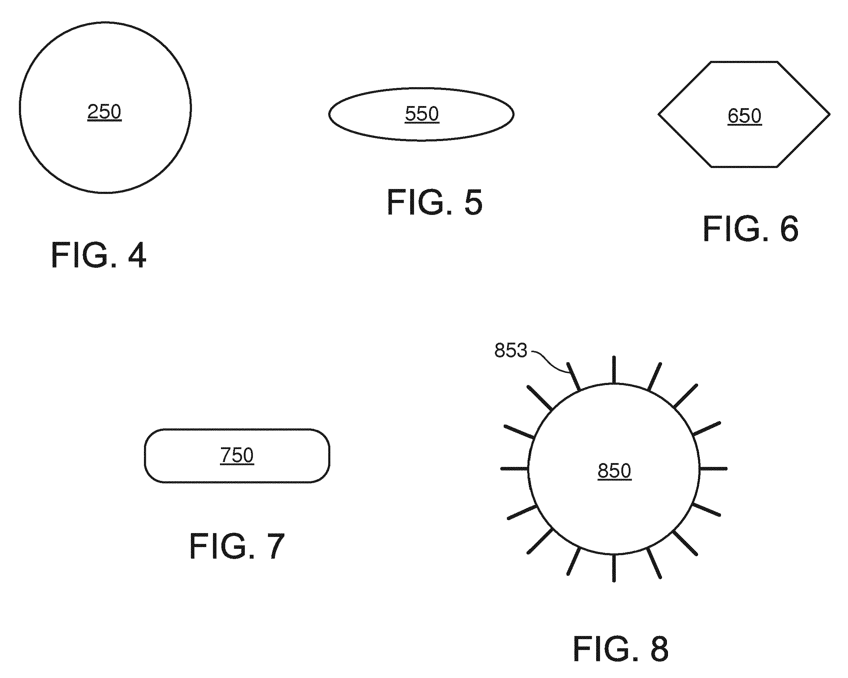

FIG. 4 illustrates a cross sectional shape of a circular or cylindrical heat pipe 250, according to an aspect of the present invention. A cylindrical heat pipe is easy to manufacture and install with conventional tools. FIG. 5 illustrates a cross sectional shape of an oval heat pipe 550, according to an aspect of the present invention. The oval heat pipe 550 may have improved heat transfer characteristics compared to the cylindrical heat pipe. FIG. 6 illustrates a cross sectional shape of a polygonal heat pipe 650, according to an aspect of the present invention. The polygonal shape may include rectangular, hexagonal, square or any other suitable polygonal shape. FIG. 7 illustrates a cross sectional shape of a rectangular with rounded corners heat pipe 750. The rectangular with rounded corners shape may have improved heat transfer characteristics over the oval heat pipe 550, due to increased surface area. FIG. 8 illustrates a cross sectional shape of a circular or cylindrical heat pipe 850 with a plurality of fins 853, according to an aspect of the present invention. The fins 853 are configured to increase the heat transfer capability of the heat pipe, may be arranged axially as shown or radially, and may be comprised of a material having high thermal conductivity, such as copper or aluminum.

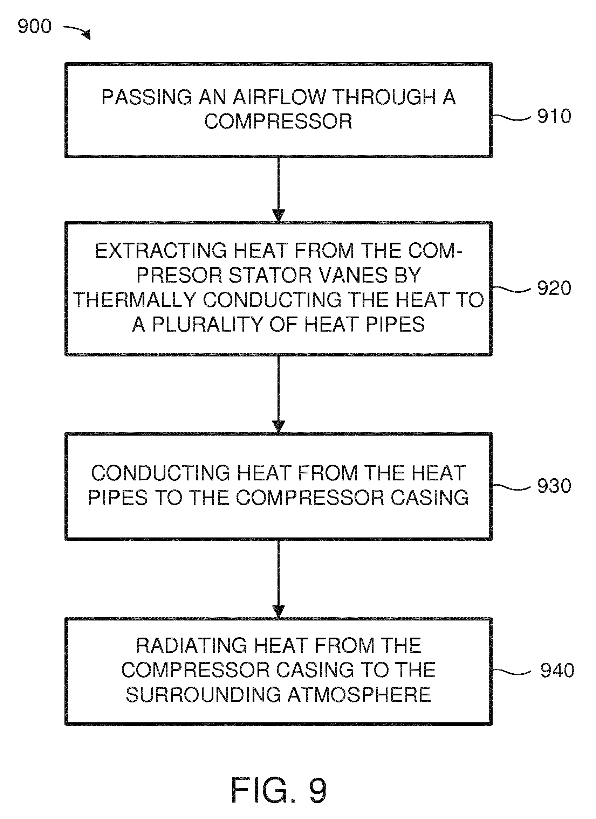

FIG. 9 illustrates a method 900 for extracting heat from a turbomachine. The method includes a step 910 of passing an airflow through a compressor, the compressor acting on the airflow to create a compressed airflow. An extracting step 920 extracts heat from the stator vanes 113 with a plurality of heat pipes 250. The heat pipes 250 may include a molten salt heat transfer medium, such as, potassium, sodium, cesium, or a liquid metal or combinations thereof. The heat pipes 250 are in thermal communication with the compressor casing 111. A conducting step 930 conducts heat from the heat pipes 250 to the compressor casing 111. A radiating step 940 radiates the heat from the compressor casing 111 to the atmosphere at least partially surrounding the compressor 110 or turbomachine 100.

The cooling system of the present invention provides a number of advantages. Turbomachine efficiency may be improved which results in improved combined cycle heat rate. The turbine section buckets, wheels and combustion gas transition pieces may have improved lifespans due to the cooler compressor discharge airflow.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbomachine comprising:
   a compressor configured to compress air received at an intake portion to form a compressed airflow that exits into an outlet portion, the compressor having a plurality of rotor blades and a plurality of stator vanes, and a compressor casing forming an outer shell of the compressor;
   a combustor operably connected with the compressor, the combustor receiving the compressed airflow;
   a turbine operably connected with the combustor, the turbine receiving combustion gas flow from the combustor;
   a cooling system operatively connected to the compressor casing, the cooling system including a plurality of heat pipes located in at least a portion of the plurality of stator vanes, the plurality of heat pipes are configured to be in thermal communication with the compressor casing; and
   wherein heat absorbed by the plurality of heat pipes is transferred to the compressor casing.
2. The turbomachine of clause 1, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
3. The turbomachine of any preceding clause, the plurality of heat pipes further comprising a molten salt heat transfer medium including one or combinations of, potassium, sodium or cesium.
4. The turbomachine of any preceding clause, the plurality of heat pipes located in stator vanes between a first through last stage of the compressor.
5. The turbomachine of any preceding clause, wherein the plurality of heat pipes have a cross-sectional shape, the cross sectional shape generally comprising at least one of:
   circular, oval, rectangular with rounded corners, or polygonal.
6. The turbomachine of any preceding clause, the plurality of heat pipes further comprising a plurality of fins, the plurality of fins configured to increase the heat transfer capability of the plurality of heat pipes.
7. The turbomachine of any preceding clause, the plurality of heat pipes further comprising a molten salt heat transfer medium including one or combinations of, potassium, sodium or cesium, the plurality of heat pipes located in stator vanes between a first through last stage of the compressor, and wherein the plurality of heat pipes have a cross-sectional shape, the cross sectional shape generally comprising at least one of, circular, oval, rectangular with rounded corners, or polygonal.
8. The turbomachine of any preceding clause, the plurality of heat pipes further comprising a plurality of fins, the plurality of fins configured to increase the heat transfer capability of the plurality of heat pipes.
9. A cooling system for a turbomachine, the turbomachine including a compressor, a combustor operably connected with the compressor, and a turbine operably connected with the combustor, the compressor including a plurality of stator vanes and a compressor casing forming an outer shell of the compressor, the cooling system operatively connected to the compressor casing, the cooling system comprising:
   a plurality of heat pipes located in at least a portion of the plurality of stator vanes, the plurality of heat pipes are configured to be in thermal communication with the compressor casing, and wherein heat absorbed by the plurality of heat pipes is transferred to the compressor casing.
10. The cooling system of any preceding clause, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
11. The cooling system of any preceding clause, the plurality of heat pipes further comprising a molten salt heat transfer medium including one or combinations of, potassium, sodium or cesium.
12. The cooling system of any preceding clause, the plurality of heat pipes located in stator vanes between a first through last stage of the compressor.
13. The cooling system of any preceding clause, wherein the plurality of heat pipes have a cross-sectional shape, the cross sectional shape generally comprising at least one of:
   circular, oval, or rectangular with rounded corners, or polygonal.
14. The cooling system of any preceding clause, the plurality of heat pipes further comprising a plurality of fins, the plurality of fins configured to increase the heat transfer capability of the plurality of heat pipes.
15. The cooling system of any preceding clause, the plurality of heat pipes further comprising a molten salt heat transfer medium including one or combinations of, potassium, sodium or cesium, the plurality of heat pipes located in stator vanes between a first through last stage of the compressor; and
   wherein the plurality of heat pipes have a cross-sectional shape, the cross sectional shape generally comprising at least one of, circular, oval, or rectangular with rounded corners, or polygonal.
16. The cooling system of any preceding clause, the plurality of heat pipes further comprising a molten salt heat transfer medium including one or combinations of, potassium, sodium or cesium, the plurality of heat pipes located in stator vanes between a first through last stage of the compressor; and
   wherein the plurality of heat pipes have a plurality of fins, the plurality of fins configured to increase the heat transfer capability of the plurality of heat pipes.
17. A method of transferring heat to a compressor casing of a turbomachine, the method comprising:
   passing an airflow through a compressor, the compressor casing forming an outer shell of the compressor, the compressor having a plurality of stator vanes, the compressor acting on the airflow to create a compressed airflow;
   extracting heat from the plurality of stator vanes by thermally conducting the heat to a plurality of heat pipes, the plurality of heat pipes in thermal communication with the compressor casing;
   conducting heat from the plurality of heat pipes to the compressor casing; and
   radiating the heat from the compressor casing to an atmosphere surrounding the turbomachine.
18. The method of any preceding clause, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
19. The method of any preceding clause, the plurality of heat pipes further comprising a molten salt heat transfer medium including one or combinations of, potassium or sodium or cesium.
20. The method of any preceding clause, the plurality of heat pipes located in stator vanes between a first through last stage of the compressor; and
   wherein the plurality of heat pipes have a cross-sectional shape generally comprising at least one of, circular, oval, or rectangular with rounded corners, or polygonal.

## Claims

1. A turbomachine (100) comprising:
a compressor (110) configured to compress air received at an intake portion (202) to form a compressed airflow that exits into an outlet portion (204), the compressor having a plurality of rotor blades (112) and a plurality of stator vanes (113), and a compressor casing (111) forming an outer shell of the compressor;
a combustor (120) operably connected with the compressor, the combustor receiving the compressed airflow;
a turbine (130) operably connected with the combustor, the turbine receiving combustion gas flow from the combustor;
a cooling system operatively connected to the compressor casing (111), the cooling system including a plurality of heat pipes (250) located in at least a portion of the plurality of stator vanes (113), the plurality of heat pipes (250) are configured to be in thermal communication with the compressor casing (111); and
wherein heat absorbed by the plurality of heat pipes (250) is transferred to the compressor casing (111).

2. The turbomachine of claim 1, the plurality of heat pipes (250) further comprising a heat transfer medium (252) including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

3. The turbomachine of any preceding claim, the plurality of heat pipes (250) further comprising a molten salt heat transfer medium including one or combinations of, potassium, sodium or cesium.

4. The turbomachine of any preceding claim, the plurality of heat pipes (250) located in stator vanes (113) between a first through last stage of the compressor.

5. The turbomachine of any preceding claim, wherein the plurality of heat pipes (250) have a cross-sectional shape, the cross sectional shape generally comprising at least one of:
circular, oval, rectangular with rounded corners, or polygonal.

6. The turbomachine of any preceding claim, the plurality of heat pipes (250) further comprising a plurality of fins (853), the plurality of fins configured to increase the heat transfer capability of the plurality of heat pipes.

7. The turbomachine of any preceding claim, the plurality of heat pipes (250) further comprising a molten salt heat transfer medium including one or combinations of, potassium, sodium or cesium, the plurality of heat pipes located in stator vanes between a first through last stage of the compressor, and wherein the plurality of heat pipes have a cross-sectional shape, the cross sectional shape generally comprising at least one of, circular, oval, rectangular with rounded corners, or polygonal.

8. The turbomachine of claim 7, the plurality of heat pipes (250) further comprising a plurality of fins (853), the plurality of fins configured to increase the heat transfer capability of the plurality of heat pipes.

9. A cooling system for a turbomachine (100), the turbomachine including a compressor (110), a combustor (120) operably connected with the compressor, and a turbine (130) operably connected with the combustor, the compressor including a plurality of stator vanes (113) and a compressor casing (111) forming an outer shell of the compressor, the cooling system operatively connected to the compressor casing, the cooling system comprising:
a plurality of heat pipes (250) located in at least a portion of the plurality of stator vanes, the plurality of heat pipes (250) are configured to be in thermal communication with the compressor casing (111), and wherein heat absorbed by the plurality of heat pipes (250) is transferred to the compressor casing (111).

10. The cooling system of claim 9, the plurality of heat pipes (250) further comprising a heat transfer medium (252) including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

11. The cooling system of claim 9 or claim 10, the plurality of heat pipes (250) further comprising a molten salt heat transfer medium (252) including one or combinations of, potassium, sodium or cesium.

12. A method (900) of transferring heat to a compressor casing (111) of a turbomachine (100), the method comprising:
passing (910) an airflow through a compressor (110), the compressor casing forming an outer shell of the compressor, the compressor having a plurality of stator vanes (113), the compressor acting on the airflow to create a compressed airflow;
extracting (920) heat from the plurality of stator vanes by thermally conducting the heat to a plurality of heat pipes (250), the plurality of heat pipes in thermal communication with the compressor casing;
conducting (930) heat from the plurality of heat pipes (250) to the compressor casing; and
radiating (940) the heat from the compressor casing (111) to an atmosphere surrounding the turbomachine.

13. The method of claim 12, the plurality of heat pipes (250) further comprising a heat transfer medium (252) including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

14. The method of claim 12 or claim 13, the plurality of heat pipes (250) further comprising a molten salt heat transfer medium including one or combinations of, potassium or sodium or cesium.

15. The method of any of claims 12 to 14, the plurality of heat pipes (250) located in stator vanes (113) between a first through last stage of the compressor; and
wherein the plurality of heat pipes (250) have a cross-sectional shape generally comprising at least one of, circular, oval, or rectangular with rounded corners, or polygonal.
